# EUROPEAN PATENT APPLICATION

(11) **EP 4 450 227 A1**
(43) Date of publication of application: **23.10.2024**
(21) Application number: 24170627.4
(22) Date of filing: 16.04.2024
(51) Int. Cl.: B25B 13/50, B25B 17/02, B25B 25/00

(54) **DEVICE AND METHOD FOR TIGHTENING AND LOOSENING A TURNBUCKLE**

(30) Priority: 18.04.2023 FI 20235435
(71) Applicant: Mönkkönen, Markku, 71840 Kuuslahti (FI)
(72) Inventor: Mönkkönen, Markku, 71840 Kuuslahti (FI)
(74) Representative: Wilenius, Jami Juhani

(57) **Abstract**

The invention concerns a device and a method for tightening and loosening turnbuckles. The device (100) has a drive system comprising a driveshaft (104), a main cogwheel (106) and a reduction gear between the driveshaft (104) and the main cogwheel (106). The reduction gear transmits rotation of the driveshaft (104) to rotation of the main cogwheel (106) with a lower rotation speed and increases torque. The main cogwheel (106) has an opening (108), which is configured to accommodate a part of the turnbuckle in such a way that the rotation axis of the turnbuckle and the rotation axis of the main cogwheel are coaxial.

## Description

### FIELD OF THE INVENTION

The invention concerns a device and a method for tightening and loosening a turnbuckle, especially in connection with turnbuckles that are used for fastening shipping containers.

### PRIOR ART

Shipping containers, when carried on board ships that transport them, are fastened from their corners to a deck or an underlying shipping container with various fastening members. One such fastening member is a turnbuckle or a ratchet tensioner, which fastens the bottommost shipping containers to the deck of the ship. The turnbuckles are tightened and loosened by hand in different stages of loading with suitable hand tools, typically with a turnbuckle key or a suitable rod. Handling of the turnbuckles with such a tool is slow and hard work.

### OBJECT OF THE INVENTION

An object of the invention is a device for tightening and loosening a turnbuckle. The device and/or a method solve or at least alleviate the problems associated with the hand tools of the prior art.

### SHORT DESCRIPTION OF THE INVENTION

The object of the invention is achieved with a device according to claim 1 and/or a method according to claim 15. Some advantageous embodiments of the invention have been presented in claims 2 to 14. A method according to the invention has been presented in claim 15.

### SHORT DESCRIPTION OF THE DRAWINGS

The invention is now described in more detail in connection with advantageous embodiments by referring to the enclosed drawings, of which:
Figure 1 illustrates a device according to an embodiment with a turnbuckle;
Figure 2 illustrates an isometric drawing from an oblique angle of view of a device according to a first embodiment;
Figure 3 illustrates a side view of a device according to a first embodiment;
Figure 4 illustrates an end view of a device according to a first embodiment;
Figure 5 illustrates a section of a device according to a first embodiment along section A-A of Figure 4;
Figure 6 illustrates a side view of a device according to a second embodiment that makes use of a cordless drill;
Figure 7 illustrates a top view of the device according to the embodiment of Figure 6 that makes use of a cordless drill.

### DETAILED DESCRIPTION OF THE INVENTION

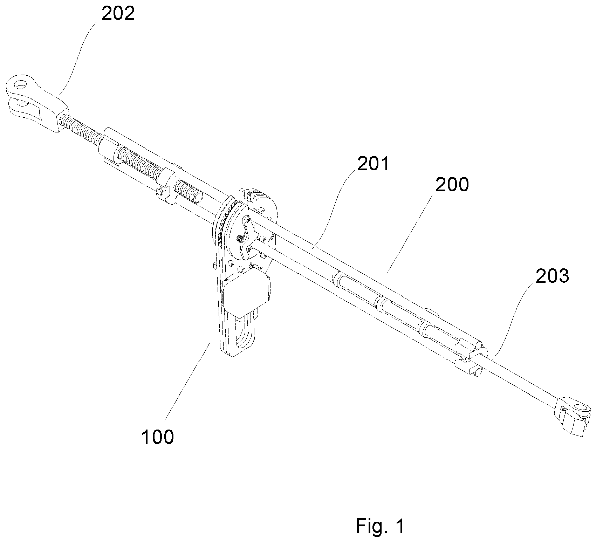

Figure 1 illustrates a device 100 according to an embodiment with a turnbuckle 200. Although the turnbuckle 200 is not part of the invention, the embodiments of the invention are easier to understand with some knowledge of the turnbuckles. The turnbuckle 200 has a rotatable central body 201, which typically consists of two parallel metal rods at a certain distance to each other and joined together with attachments. At one end of the central body 201 there is a first bar 202 which has a hook end fitting and threads and which connects to the attachments of the central body 201, which have internal threads. When the central body is rotated in one direction, the end fitting at the end of the first bar 202 moves closer to the central body 201, and when rotated to the opposite direction, the end fitting moves farther away from the central body. On the opposite end of the central body there is a second bar 203 with protrusions arranged at certain intervals. The second bar 203 can be set parallel to the two rods of the central part and to the first bar 202 by placing the second bar to a slot of an attachment of the central body. The second bar 203 can rotate freely in the slot and slide on a section between protrusions. The device according to an embodiment is fitted onto the central body 201 of the turnbuckle and used to rotate said central body, and this causes tightening or loosening of the turnbuckle depending on the direction of the rotation.

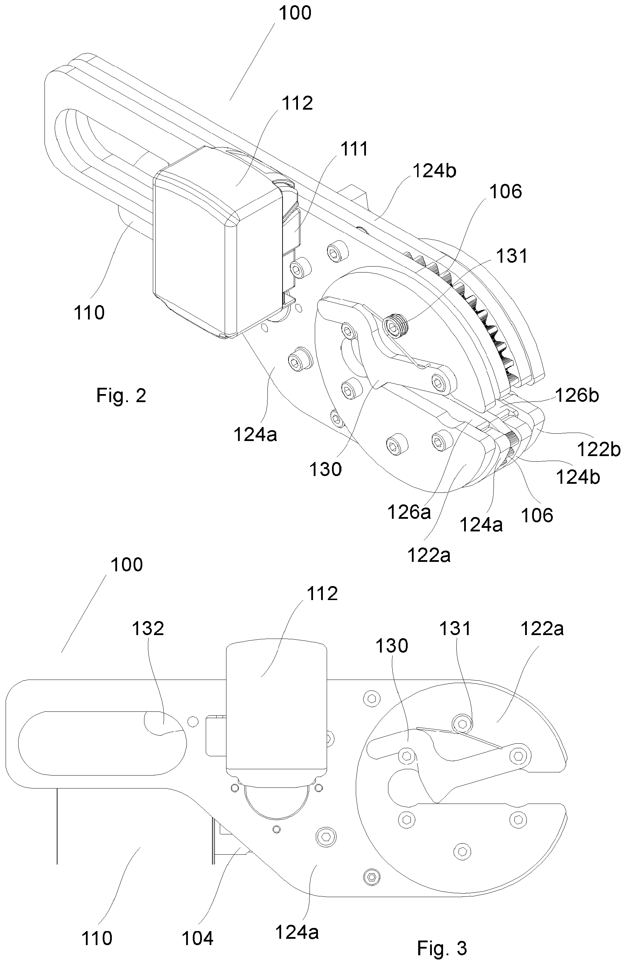

A device 100 according to a first embodiment of the invention is illustrated as seen from various directions in Figures 2 to 5. The device 100 is intended for tightening and loosening a turnbuckle of which an example is shown in Figure 1. Within the context of the present disclosure, tightening can be understood to also mean loosening, *mutatis mutandis,* because only the direction of rotation is different between the two functions. The device 100 has a drive system, which comprises a driveshaft 104 arranged to be rotated by a motor, and a main cogwheel 106 and a reduction gear between the driveshaft and the main cogwheel 106. The reduction gear is arranged to transmit the rotation of the driveshaft 104 to rotation of the main cogwheel at a lower rotational speed than the rotational speed of the driveshaft 104. Then also the torque of the main cogwheel 106 is greater than the torque of the driveshaft 104.

Said main cogwheel 106 of the device 100 has an opening 108, which extends radially from the outer edge of the main cogwheel 106 and passes through the center of the main cogwheel so that the opening 108 of the main cogwheel is arranged to accommodate a part of the turnbuckle in such a way that the rotation axis of the turnbuckle and the rotation axis of the main cogwheel are coaxial. The shape of the opening of the main cogwheel 106 advantageously follows the shape and the size of the central body 201 of the turnbuckle in a direction perpendicular to the rotation axis of the central body of the turnbuckle. For example, the diameter of the bars of the central body of a typical turnbuckle is 22 mm, so the opening of the main cogwheel is advantageously e.g. 22 to 26 mm wide. The depth of the opening of the main cogwheel in radial direction (of the cogwheel) has to be great enough for the rotation axis of the central body of the turnbuckle and the rotation axis of the main cogwheel to be identical, i.e. coaxial. In that case, the center point between the rods of the central body of the turnbuckle is at the rotation axis of the main cogwheel.

In the embodiments of devices 100 shown in Figures 1 to 5, the device comprises an electric motor 110 that is attached to the driveshaft 104 and arranged to rotate the driveshaft 104. The device comprising the electric motor advantageously also comprises a battery 112, which is connected to the electric motor. The battery is advantageously removable for charging or for replacing, and the device can have a battery connector 111 to facilitate removal of the battery. For example, very widely available batteries from well-known tool manufacturers and corresponding battery connectors can be used in the device. The device preferably has an operating switch 132 for controlling the electric motor, and this operating switch controls an electrical switch 134 to adjust the rotation speed and possibly to set rotation direction. Also, the electrical switch alone or other arrangements can be used for adjusting the rotation speed.

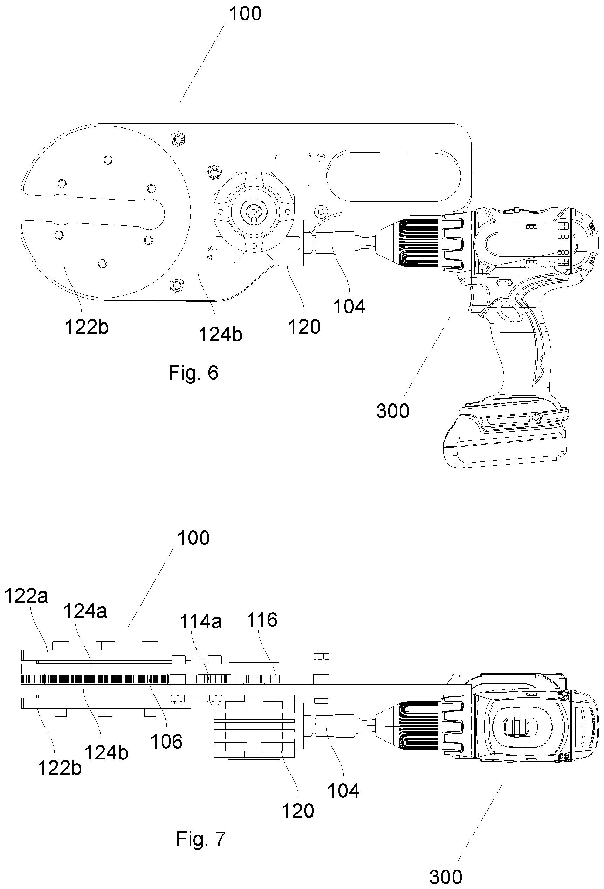

Alternatively, the driveshaft can be rotated with a motor that is not a part of the device, for example, with a cordless drill or with a cordless electric screwdriver as shown in embodiments of Figures 6 and 7. In an embodiment, a motor powered by compressed air can be used.

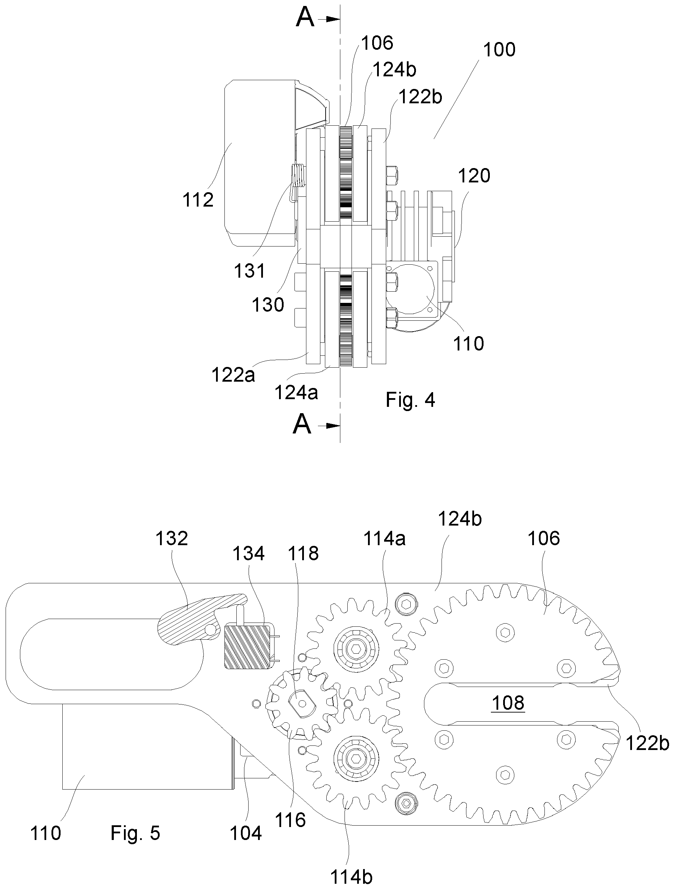

Figure 5 illustrates a cross-section of the device along section A-A shown in Figure 4. Figure 5 shows details of the drivetrain of an embodiment of the device. In the embodiment of Figure 5, the device comprises two identically toothed transmission cogwheels 114a, 114b, both of which mesh with the main cogwheel 106 except in the positions where the opening 108 of the main cogwheel is facing either one of the transmission cogwheels 114a, 114b. In such cases, only one of the transmission cogwheels is meshed with the main cogwheel. When the opening of the main cogwheel meets the first transmission cogwheel, the second transmission cogwheel still remains meshed with the main cogwheel. As the second transmission cogwheel rotates, the main cogwheel keeps rotating and the opening rotates past the first transmission cogwheel and thus the first transmission cogwheel again becomes meshed with the main cogwheel. Soon thereafter, the opening meets the second transmission cogwheel so it is no longer meshed with the main cogwheel. However, the first transmission cogwheel still continues to rotate the main cogwheel, until both transmission cogwheels 114a, 114b are again meshed with the main cogwheel 106. Advantageously, the transmission cogwheels have identical toothing, and in addition they are arranged at such a distance from each other that they do not intermesh.

The device according to the embodiment of Figure 5 also comprises an input cogwheel 116, which is meshed with the two identically toothed transmission cogwheels 114a, 114b. When the input cogwheel 116 rotates, both transmission cogwheels 114a, 114b rotate continuously. When the input cogwheel 116 rotates, also the main cogwheel 106 rotates continuously because at least one of the transmission cogwheels is always meshed with the main cogwheel 106.

In an embodiment, the drivetrain functions as a reduction gear, and it can be implemented with ratios of the number of teeth in different cogwheels. Preferably, the input cogwheel 116 has fewer teeth than each of the transmission cogwheels 114a, 114b and the main cogwheel 106. Then the input cogwheel rotates faster than the transmission cogwheels 114a, 114b and the main cogwheel 106. Preferably, also each transmission cogwheel 114a, 114b has fewer teeth than the main cogwheel 106. Then the main cogwheel 106 is the cogwheel with the lowest rotation speed and highest torque. In the embodiment of Figure 5, the input cogwheel 116 has 11 teeth, the transmission cogwheels 114a, 114b each have 16 teeth and the main cogwheel would have 40 teeth without the opening. The opening 108 made to the main cogwheel covers the area of three teeth, so the main cogwheel only has 37 teeth but it operates like a cogwheel with 40 teeth when calculating transmission ratios.

In an embodiment, the driveshaft 104 of the device 100 is connected to the input cogwheel 116 by means of an angle gearbox 120. In that case, the angle between the rotation axis of the driveshaft 104 and the rotation axis of the input cogwheel 116 is 90°. The driveshaft 104 is either an input shaft of the angle gearbox 120 or the driveshaft 104 directly rotates an input shaft of the angle gearbox 120. An output shaft 118 of the angle gearbox is preferably a shaft that rotates the input cogwheel 116. Preferably, the angle gearbox 120 operates also as a reduction gear, where the output shaft rotates at a lower rotation speed than the input shaft. Preferably, the transmission ratio of the angle gearbox is between 10:1 and 60:1 and very preferably between 30:1 and 40:1. In an embodiment, the transmission ratio between the input shaft 104 of the device 100 and the main cogwheel 106 is preferably between 40:1 and 150:1 and very preferably between 80:1 and 120:1. Preferably, a share of the transmission ratio is realized with the angle gearbox and another share is realized with the numbers of teeth of the input cogwheel, the transmission cogwheels and the main cogwheel.

The device according to the first embodiment illustrated in Figures 2 to 5 also comprises a frame having two plates 124a, 124b. The plates are preferably metal plates, which renders the device stiff and sturdy. Both of the transmission cogwheels 114a, 114b and/or the input cogwheel 116 are preferably attached to the frame between said two plates and equipped with bearings. The bearings can be implemented by applying, for example, a ring bearing, the outer ring of which is attached to a cogwheel and the inner ring is attached between the two plates of the frame with a screw or a bolt. Ball bearings between the inner ring and the outer ring of the ring bearing thus function as bearings for the cogwheel. Other suitable bearings and bearing arrangement implementation methods can also be applied instead of or in addition to the ring bearings.

The main cogwheel 106 cannot be equipped with a similar ring bearing as the input cogwheel 116 and/or the transmission cogwheels 114a, 114b, because in that case the ring bearing would block the opening 108 of the main cogwheel. In an embodiment, on both sides of the main cogwheel 106, in the direction of the rotation axis, there is a spacer 126a, 126b whose thickness is at least the same as the thickness of the plate of the frame and whose diameter is smaller than that of the main cogwheel. The spacer on both sides of the main cogwheel 106 can be, for example, a round disc, which has a diameter smaller than the largest diameter of the main cogwheel and to which disc an opening similar to the opening of the main cogwheel has been made. Alternatively, a spacer can be formed by two segments of a circle, which are attached on both sides of the opening 108 of the main cogwheel so that they do not cover the opening. In a sense, the opening of the spacer extends the whole way through the spacer when circular segments are used. If the opening of the main cogwheel is larger than what is needed for positioning the central body of the turnbuckle, the opening of the spacer can be made smaller than the opening of the main cogwheel. In such a case, it must be ensured that the opening of the spacer allows for positioning of the central body of a turnbuckle into the device.

Each of the two plates 124a, 124b of the frame has a circular aperture in which the spacer 126a, 126b can be rotated but cannot be moved in directions perpendicular to the rotation axis of the main cogwheel. The primary function of the spacers 126a, 126b is thus to maintain the position of the main cogwheel 106 in relation to the frame in the directions perpendicular to the rotation axis of the cogwheel.

The spacers 126a, 126b do not prevent the main cogwheel 106 from moving in the direction of its rotation axis, though. For this reason, in an embodiment, the previously described spacers 126a, 126b have been attached to both sides of the main cogwheel in the direction of its rotation axis and outermost on both sides there is a slide disc 122a, 122b, which has a larger diameter than the spacer 126a, 126b. The slide discs have a slide surface, which, near the outer periphery, slides against the surface of a frame plate 124a, 124b or very close to it. The slide discs prevent the main cogwheel from moving in the direction of its rotation axis and thus from touching the plates 124a, 124b of the frame. Understandably, both of the slide discs 122a, 122b have an opening that extends radially from the outer edge of the slide disc 122a, 122b and passes through the center of the slide disc, wherein the opening of the slide disc is arranged to accommodate a part of the turnbuckle in such a way that the rotation axis of the turnbuckle and the rotation axis of the main cogwheel are coaxial. If the opening of the main cogwheel is larger than what is needed for positioning the central body of the turnbuckle, the opening of the slide disc can be made smaller than the opening of the main cogwheel. In such a case, it must be ensured that the opening of the spacer allows for positioning of the central body of a turnbuckle into the device. It can be seen, for example, in Figure 5 how in that embodiment the opening of the slide disc 122b is slightly smaller on the outer edge and in the middle than the opening of the main cogwheel 106 and that recesses corresponding to the bars of the central body 201 of the turnbuckle have been shaped in the opening of the slide disc 122b, wherein the turnbuckle 200 sets into a correct position in the opening and better remains in that position.

In an embodiment of the device 100, the rotation axis of the main cogwheel 106, the rotation axes of both transmission cogwheels 114a, 114b and the rotation axis of the input cogwheel 116 are all parallel to one another. Such an arrangement can be seen in the embodiment of Figure 5 in which all said cogwheels are shown.

In an embodiment, the device can also comprise a pivotable locking lever 130, which can be pivoted to a position where it partially covers the opening 108 of the main cogwheel 106. Preferably, the locking lever partially covers the opening 108 of the main cogwheel at the rotation axis of the main cogwheel when the locking lever is in a locking position, wherein a turnbuckle 200 placed into the device is locked to the device and can be removed from the device only by opening the locking lever 130. The locking lever 130 is preferably spring-loaded so that the locking lever is kept, by means of a spring 131, in the position where it partially covers the opening 108 of the main cogwheel 106. Preferably, a locking lever having a spring 131 is designed in such a way that a turnbuckle 200 can be placed and locked into the device without touching the locking lever 130 but by only pushing the central body of the turnbuckle into the opening 108 of the main cogwheel. In an embodiment, the locking lever 130 is designed in such a way that removing of the turnbuckle from the opening 108 requires manual operation of the locking lever. In another embodiment, the locking lever 130 is designed in such a way that the turnbuckle can be removed from the opening 108 by forcefully pulling the device away from the turnbuckle 200.

The second embodiment of the device 100 shown in Figures 6 and 7 differs from the above-described embodiments of Figures 2 to 5 only in that in Figures 6 and 7 the driveshaft of the device is rotated by an external motor. Thus, the device of the second embodiment of Figures 6 and 7 does not have an electric motor of its own or a battery, and neither does it have an operating switch or an electronic switch for controlling the electric motor. The device 100 is used, for example, by attaching a cordless drill 300 to the driveshaft 104 of the device and by controlling the rotation speed of the cordless drill 300 with the operating switch of the cordless drill. In relation to everything else, all embodiments of the present disclosure can also be used in connection with the embodiment of Figures 6 and 7.

An aspect of the invention is a method for tightening a turnbuckle 200. The method comprises steps of positioning a rotatable central body 201 of the turnbuckle 200 partially into the opening 108 of the main cogwheel 106 of the device 100 according to any embodiment in such a way that the rotation axis of the central body 201 of the turnbuckle and the rotation axis of the main cogwheel 106 are coaxial and locking the turnbuckle 200 into the opening 108 of the main cogwheel 106. Preferably, the locking of the turnbuckle into the opening is done with a locking lever 130, but other suitable locking means can be utilized as well. The method comprises steps of rotating the driveshaft 104 of the device 100 with a motor to rotate the central body 201 of the turnbuckle, releasing the locking of the turnbuckle 200, and removing the central body 201 from the opening 108 of the main cogwheel 106 of said device 100. In a preferred embodiment, the method further comprises a step of detecting a pre-determined torque threshold value during rotation of the central body of the turnbuckle, wherein the rotation of the motor is stopped when the threshold value is surpassed.

To a skilled person in the art, it is obvious that the basic idea of the invention can be implemented in various ways, as technology and materials develop. The invention and its embodiments are therefore not limited to only the examples presented above; rather they may vary within the scope of the claims.

## Claims

1. A device (100) for tightening and loosening a turnbuckle, which device has a drive system that comprises:
a driveshaft (104) arranged to be rotated by a motor;
a main cogwheel (106) functioning as the output of the drive system; and
a reduction gear between the driveshaft (104) and the main cogwheel (106), wherein the reduction gear is arranged to transmit the rotation of the driveshaft (104) to rotation of the main cogwheel (106) at a lower rotation speed than the rotation speed of the driveshaft (104),
which device (100) is **characterized in that** said main cogwheel (106) has an opening (108) that extends radially from the outer edge of the main cogwheel (106) and passes through the center of the main cogwheel so that the opening (108) of the main cogwheel is arranged to accommodate a part of the turnbuckle in such a way that the rotation axis of the turnbuckle and the rotation axis of the main cogwheel are coaxial.

2. The device according to claim 1, which comprises an electric motor (110) attached to the driveshaft (104) and arranged to rotate the driveshaft (104).

3. The device according to claim 2, which further comprises a battery (112) connected to the electric motor.

4. The device according to any of claims 1 to 3, which further comprises two identically toothed transmission cogwheels (114a, 114b), both of which are meshed with the main cogwheel (106) except in the positions where the opening (108) of the main cogwheel is facing either one of the transmission cogwheels (114a, 114b) whereupon only one of the transmission cogwheels (114a, 114b) is meshed with the main cogwheel (106).

5. The device according to claim 4, where said two identically toothed transmission cogwheels (114a, 114b) are arranged to such a distance from each other that the transmission cogwheels do not intermesh.

6. The device according to claim 4 or 5, which further comprises an input cogwheel (116) that is meshed with said two identically toothed transmission cogwheels (114a, 114b).

7. The device according to any one of claims 4 to 6, wherein the input cogwheel (116) has fewer teeth than each of the transmission cogwheels (114a, 114b) and the main cogwheel (106).

8. The device according to any one of claims 4 to 7, wherein each of the transmission cogwheels (114a, 114b) has fewer teeth than the main cogwheel (106).

9. The device according to any one of claims 1 to 7, which further comprises a frame having two plates (124a, 124b), wherein both of the transmission cogwheels (114a, 114b) and the input cogwheel (116) are attached to the frame between said two plates and equipped with bearings.

10. The device according to claim 9, wherein the main cogwheel (106) has a spacer (126a, 126b) on its both sides in the direction of the rotation axis, which spacer has a thickness that is at least the same as the thickness of the plate of the frame and a diameter smaller than that of the main cogwheel, and outermost on both sides there is a slide disc (122a, 122b), which has a larger diameter than the spacer (126a, 126b), where both of the slide discs (122a, 122b) have an opening that extends radially from the outer edge of the slide disc (122a, 122b) and passes through the center of the slide disc, wherein said opening (108) of the slide disc is arranged to accommodate a part of the turnbuckle in such a way that the rotation axis of the turnbuckle and the rotation axis of the main cogwheel are coaxial, wherein each of the two plates (124a, 124b) of the frame have a circular aperture, in which the spacer (126a, 126b) can be rotated but cannot be moved in directions perpendicular to the rotation axis of the main cogwheel.

11. The device according to any one of claims 1 to 10, wherein the rotation axis of the main cogwheel (106), the rotation axes of both transmission cogwheels (114a, 114b) and the rotation axis of the input cogwheel (116) are all parallel to one another.

12. The device according to any one of claims 1 to 11, wherein the driveshaft (104) is connected to the input cogwheel (116) by means of an angle gearbox (120) and where the angle between the rotation axis of the driveshaft (104) and the rotation axis of the input cogwheel (116) is 90°.

13. The device according to any one of claims 1 to 12, wherein a transmission ratio between the driveshaft (104) and the main cogwheel (106) is between 40:1 and 150:1.

14. The device according to any one of claims 1 to 13, wherein the device further comprises a pivotable locking lever (130), which is pivotable to a position in which it partially covers the opening of the main cogwheel (106).

15. A method for tightening and loosening a turnbuckle (200), wherein the method comprises steps of:
positioning a rotatable central body (201) of a turnbuckle (200) partially into an opening of the main cogwheel (106) of the device (100) according to any one of claims 1 to 14 in such a way that the rotation axis of the central body (201) of the turnbuckle and the rotation axis of the main cogwheel (106) are coaxial;
locking the turnbuckle (200) into the opening (108) of the main cogwheel (106);
rotating the driveshaft (104) of said device (100) with a motor to rotate the central body (201) of the turnbuckle;
releasing the locking of the turnbuckle (200); and
removing the central body (201) from the opening (108) of the main cogwheel (106) of said device 100.
